# EUROPEAN PATENT APPLICATION

(11) **EP 1 736 984 A1**
(43) Date of publication of application: **27.12.2006**
(21) Application number: 05013643.1
(22) Date of filing: 24.06.2005
(51) Int. Cl.: G11B 20/10, G11B 7/0045, G11B 7/125

(54) **Method for automatically determining a write strategy**

(71) Applicant: DEUTSCHE THOMSON-BRANDT GMBH, 78048 Villingen-Schwenningen (DE)
(72) Inventor: Rutschmann, Richard, 79793 Wutöschingen (DE); Storz, Dieter, 78730 Lauterbach (DE); Vollmer, Christian, 79856 Hinterzarten (DE)
(74) Representative: Thies, Stephan

(57) **Abstract**

Disclosed is a method for automatically determining a write strategy for recording on an optical recording medium, and an apparatus for automatically determining a write strategy and an apparatus for writing to optical recording media using such method.
Such a method has the steps of:
- initializing (5) the parameters of the write strategy;
- writing (11,30) data to the optical recording medium;
- measuring (12,31) one or more quality indicators for the written data; and
- adjusting (13,32,36,51,55) the parameters of the write strategy based on one or more of the measured quality indicators.

## Description

The invention relates to a method for automatically determining a write strategy for recording on an optical recording medium, and to an apparatus for automatically determining a write strategy and an apparatus for writing to optical recording media using such method.

The number of different CD and DVD recorder applications is growing rapidly. Likewise, the number of media manufacturers and hence the number of different types of optical recording media is constantly increasing. It is to be expected that this situation will be the same for future optical recording formats such as BD (BluRay Disk) or HD-DVD.

The key requirement for any recording apparatus is to write data with at least a specified minimum quality, independent of the type of recording medium and the recording speed. The quality achieved during the writing process is mainly determined by the optical power control unit (OPC) and the so called write strategy used by the recording apparatus for a given optical recording medium. The optical power level is automatically adjusted by the recording apparatus, once for each new recording medium. However, the parameters for the write strategy are usually evaluated manually and determined separately for each type of recording medium and each recording speed, respectively. The parameters of the write strategy describe the shape and timing of the write signal and the write pulses, respectively. Each symbol (pit length) recorded at a certain speed has its own set of write strategy parameters on each recording medium. In total about 50 to 100 parameters need to be determined for each recording medium. The evaluation of the write strategy parameters hence needs a large amount of time and resources. Today the evaluation of the write strategy parameters for one type of recording medium engages one engineer for one day. Due to the time consuming evaluation process the number of recording media, which are supported by a recording apparatus, is limited. Similarly, new types of recording media, which arrive on the market after the development of the recoding apparatus, are not or only badly supported. This leads to customer dissatisfaction. To improve the number of supported recording media a continuously increasing amount of resources is necessary to evaluate new recording media, which at the same time necessitates an increasing size of memory in the recording apparatus for storing the evaluated sets of parameters.

US 2003/0058765 discloses a method for selecting an optimal write strategy for a specific type of recording medium. The optimal write strategy is selected from a set of write strategies stored in a recording apparatus. The apparatus bases its selection on performance results of test writings conducted on the recording medium. The write strategies are first tested at the maximum possible write speed and if necessary, at successively lower speeds, until a write strategy that achieves a minimum acceptable write quality is identified or until the minimum write speed is reached. Though this method allows to determine an optimized write strategy from a set of available write strategy, this write strategy will usually not be the most suitable write strategy.

It is an object of the present invention to propose a method for automatically determining an optimized write strategy for recording on an optical recording medium.

This object is achieved by a method for determining a write strategy for recording on an optical recording medium, having the steps of:
- initializing the parameters of the write strategy;
- writing data to the optical recording medium;
- measuring one or more quality indicators for the written data; and
- adjusting the parameters of the write strategy based on one or more of the measured quality indicators. The adjustment of the parameters of the write strategy is preferably made either by calculating optimized parameters using a dedicated algorithm or by varying the parameters and measuring the change of the quality indicators caused by the varied parameters until the quality indicators match specific target values. If the parameters are varied, they can either be varied by fixed or variable values, e.g. starting with larger values, which are then gradually reduced.
   The method can be realized both in a standalone system used for the development of a recording apparatus, which means that the obtained parameters need to be stored in a memory of the recording apparatus, or as a fully automatic algorithm embedded in a recording apparatus. Both solutions, i.e. non-embedded and embedded, use the same means and algorithms to obtain the required result. A fully automated procedure to determine the best write strategy for any type of optical recording medium brings tremendous advantages. Less resources are needed for the development of a recording apparatus and the necessary memory size is reduced, which leads to a reduced cost of such an apparatus. At the same time all types of optical recording media are recordable with a good quality.
   Advantageously, the steps of writing data to the optical recording medium, measuring one or more quality indicators for the written data, and adjusting the parameters of the write strategy based on the measured quality indicators are repeated until the quality indicators match specific target values. This iterative approach allows to further optimize the parameters of the write strategy in case the first adjusting step does not yield a sufficient recording quality. Though by iteratively adjusting the parameters of the write strategy more time is necessary for determining an optimized write strategy, this approach still has the advantage that the write strategy is not limited to a selection of predefined write strategies. Hence for each optical recording medium a most suitable write strategy can be determined, which is not a compromise of the predefined write strategies.
   In case the optimized parameters are calculated using a dedicated algorithm, preferably the method further includes the steps of varying the parameters of the write strategy and measuring the change of the quality indicators caused by the varied parameters of the write strategy in case the calculated parameters do not lead to an improved quality. In a first approach the optimized parameters are calculated. If, however, the calculated parameters do not yield an improved recording quality, the method switches to the further approach of varying the parameters until an optimized write strategy is found.
   Advantageously, the determined write strategy is stored in a memory of a recording apparatus together with an identifier of the optical recording medium. The identifier preferably includes information on the individual optical recording medium, the batch of the optical recording medium, the manufacturer, or the type. Of course, the identifier does not need to include all of the above information. In this case, if the same type of optical recording medium is re-encountered, it is not necessary to optimize the write strategy again.
   Preferably, the quality indicators include at least one of the jitter of each T-symbol, the leading and trailing edge jitter, the all T-symbol jitter (i.e. the jitter values of all occurring symbol lengths), the bit error rate, the modulation amplitude, and the signal asymmetry. Of course, other indicators can be used as well.
   According to the invention, the parameters of the write strategy include at least one of write laser power, length of the first pulse, length of the following pulses, and pulse height. As these parameters are the main parameters defining a write strategy, an optimization of at least some of these parameters leads to a suitable write strategy.
   Preferably, the initial values of the parameters are derived from a recommended write strategy indicated on the optical recording medium, a generic write strategy from a database, or a write strategy for a known similar type of optical recording medium. Usually a recommended write strategy indicated on the optical recording medium is a good starting point for optimization. However, a generic write strategy suitable for most types of optical recording media can likewise be used. However, a write strategy for a known similar type of optical recording medium can lead to a faster optimization than a generic write strategy.
   A method according to the invention is advantageously used in an apparatus for writing to optical recording media.
   For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
   - Fig. 1: shows the general concept of media detection and write strategy optimization;
   - Fig. 2: depicts a first part of a method according to the invention for optimizing the write strategy;
   - Fig. 3: shows a second part of the method for optimizing the write strategy;
   - Fig. 4: illustrates a third part of the method for optimizing the write strategy;
   - Fig. 5: depicts an example of an algorithm for calculating the first pulse lead time and the last pulse width for a DVD+R; and.
   - Fig. 6: shows two examples of a write pulse waveform used for DVD+RW.

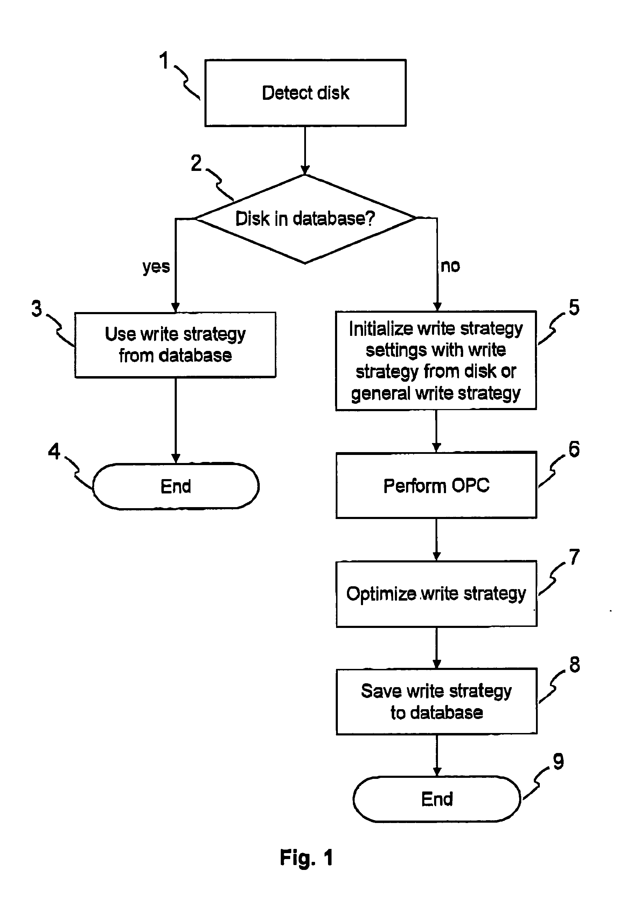

Fig. 1 shows the general concept of media detection and write strategy optimization. When a disk is detected 1 in a recording apparatus, e.g. after insertion of a new disk or upon power-up, it is checked 2 if the type, and, where applicable, the batch of disk is already included in the internal database of the recording apparatus. If this is the case, the corresponding write strategy from the database is used 3 and the determination of the write strategy is finished 4. Otherwise, the write strategy parameters are initialized 5 with a given initial write strategy. This initial write strategy is for example a recommended write strategy derived from the disk itself, a generic write strategy from the database, a write strategy for a known similar type of disk, or another suitable starting write strategy. After initiating 5 the write strategy parameters, optimum power calibration (OPC) is performed 6. Following OPC the initial write strategy is optimized 7. The optimized write strategy is then stored 8 in the database together with the new type of disk. In this way it is available when this type of disk is detected again. After storing 8 the write strategy the determination process is finished 9.

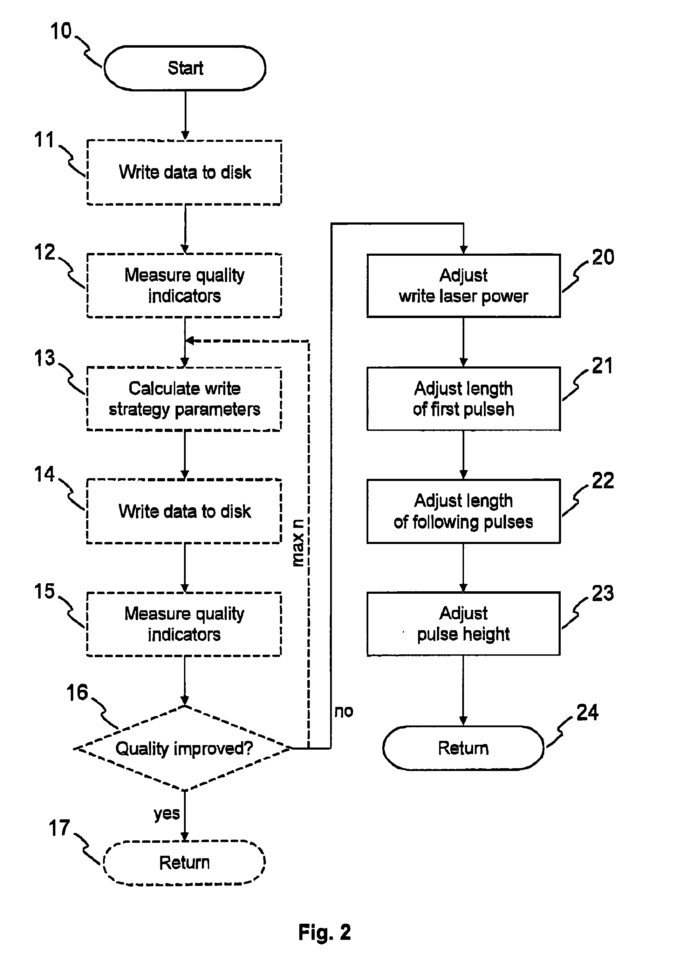

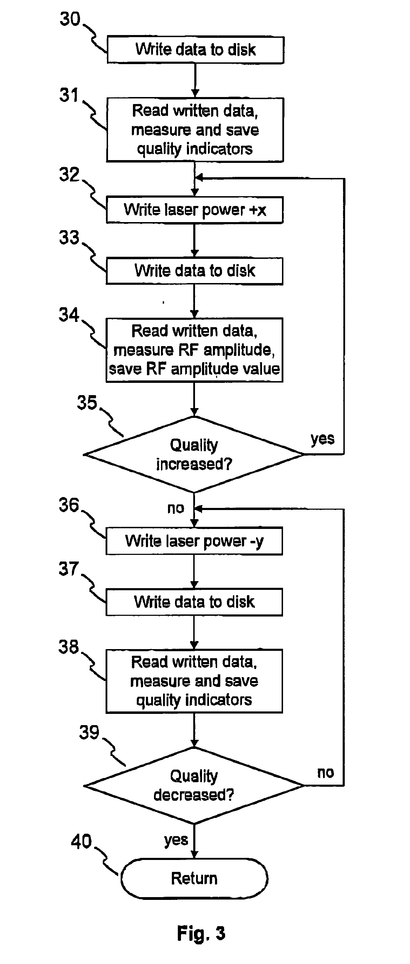

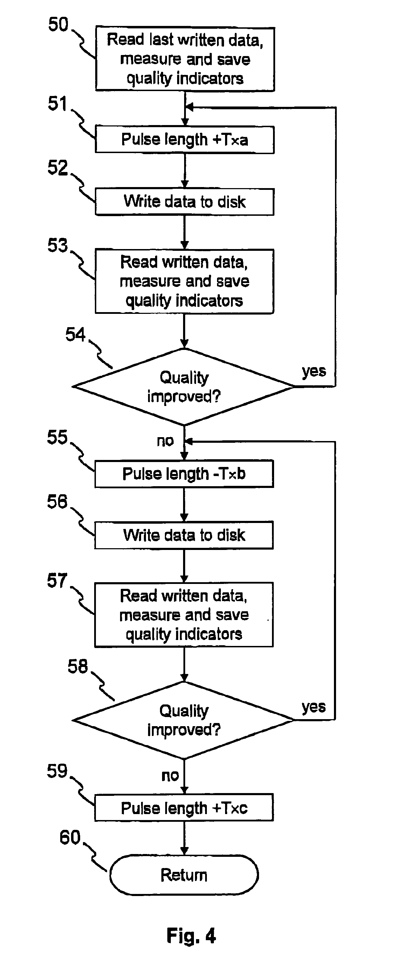

A first part of a method according to the invention for optimizing the write strategy is depicted in more detail in Fig. 2. After initializing 5 the write strategy parameters, the optimization process is started 10. The steps 11 to 17, which are indicated by dashed rectangles in Fig. 2, are optional and will be explained later on. In a plurality of iterative adjustment steps 20, 21, 22, 23 the laser power, the length of the first pulse, the length of the following pulses, and the pulse height are adjusted. Of course, these parameters can also be adjusted in a different order. However, the best results are obtained when the length of the first pulse is optimized first. The adjustment steps 20, 21, 22, 23 are explained in more detail below with reference to Figs. 3 and 4.

Optionally the optimization process starts with a non-iterative approach, which allows to reduce the duration of the optimization process. After writing 11 a block of data, e.g. one ECC sector, to the disk, the written data are read and one or more quality indicators are measured 12. The data are preferably written 11 into the power calibration area of the disk. However, especially in the case of a rewritable disk, it is likewise possible to write the data to the data area of the disk, where they can be overwritten later on. Possible quality indicators include the jitter of each T-symbol, the leading and trailing edge jitter, the all T-symbol jitter, and the bit error rate, in all cases of the equalized and/or unequalized signal. For the jitter values, both the standard deviation and the average can be used. Further quality indicators are the modulation amplitude and the signal asymmetry. In dependence on the measured quality indicators, i.e. the quality level, optimized write strategy parameters are calculated 13 by a dedicated algorithm. At least the directions in which the parameters are varied is determined by the algorithm by changing the direction of variation of a parameter if one of the quality indicators degrades. The performance of the calculated write strategy is then checked by writing 14 further data to the disk using the calculated write strategy, measuring 15 the quality indicators for the written data, and comparing 16 the measured quality indicators with the previous quality indicators. If a sufficient quality level is reached, i.e. the quality indicators match specific target values, the process returns 17 to step 7 of Fig. 1. If the quality level is not sufficient, the process branches to the iterative adjustment steps 20, 21, 22, 23. Optionally, instead of branching to the iterative adjustment steps 20, 21, 22, 23, it is likewise possible to recalculate 13 the write strategy parameters based on the new quality indicators. This is indicated by the dashed arrow in Fig 2. Preferably the number of iterations before branching to the iterative adjustment steps 20, 21, 22, 23 is restricted to a maximum number n to limit the duration of the iteration process. As a further alternative, after determining write strategy parameters yielding a sufficient quality level, during recording the write strategy parameters are further optimized using the quality indicators of the recorded data.

Fig. 3 shows the second part of the method for optimizing the write strategy, i.e. the adjustment 20 of the write laser power, in more detail. First data are written 30 to the disk. After reading 31 these data their quality indicators such as jitter, error rate, and/or RF modulation (min, max, average, beta (≈asymmetry, as defined e.g. in ECMA-349: Data Interchange on 120 mm and 80 mm Optical Disk using +R Format - Capacity: 4,7 and 1,46 Gbytes per Side)) are measured and their values are stored. Of course, if the optional steps of Fig. 2 have already been performed, these two steps can be omitted. The write laser power is then increased 32 by a specific value x. Again data are written 33 to the disk using this new write laser power. As before the written data are read 34, the quality indicators are measured and their values are stored. If a comparison 35 with the previous quality indicators yields that the quality has increased, the process returns to step 32 and the write laser power is further increased. If, however, the quality has not increased, the write laser power is decreased 36 by a further specific value y. Once again data are written 37 to the disk, the written data are read 38, the quality indicators are measured and their values are stored. If a comparison 39 with the previous quality indicators indicates that the quality has not decreased, the process returns to step 336 and the write laser power is further reduced. Otherwise the process is terminated 40 and returns to step 21 of Fig. 2. Of course, various aspects of the process can be modified. For example, instead of first increasing the write laser power it can first be decreased. Furthermore, the write laser power can be changed by variable values, e.g. starting with larger values, which are then gradually reduced.

The adjustment 21 of the length of the first pulse, i.e. the third part of the method for optimizing the write strategy, is illustrated in more detail in Fig. 4. The processes for adjusting the 22, 23 the length of the following pulses and the pulse height are performed similarly and shall, therefore, not be explained here. First the data that were last written 37 to the disk are read 50 and their quality indicators such as jitter, error rate, and/or RF modulation (min, max, average, beta (≈asymmetry)) are measured and stored. The pulse length is then increased 51 by a specific fraction a of the bit clock T. Using this new pulse length further data are written 52 to the disk, whose quality indicators are again measured 53 and stored. If a comparison 54 with the previous quality indicators shows that the quality has improved, the process returns to step 51 and the pulse length is further increased. Otherwise the pulse length is decreased 55 by a specific fraction b of the bit clock. Once again data are written 56 to the disk, the written data are read 57, the quality indicators are measured and their values are stored. If a comparison 58 with the previous quality indicators indicates that the quality has improved, the process returns to step 55 and the pulse length is further decreased. Otherwise the pulse length is increased 59 again to an intermediate value between the current pulse length and the previous pulse length and the process is terminated 60 and returns to step 22 of Fig. 2. Again, various aspects of the process can be modified, e.g. by first decreasing the pulse length or changing the pulse length by variable values.

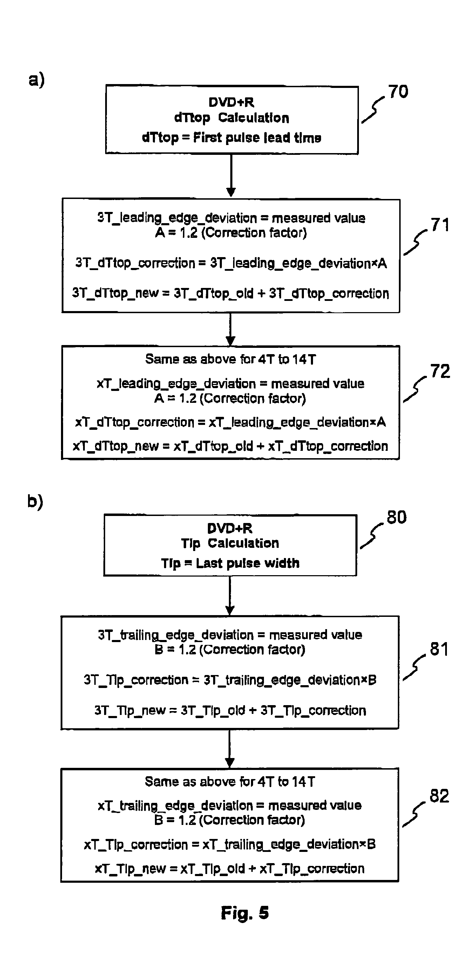

Fig. 5 depicts an example of an algorithm for calculating the first pulse lead time dTtop (part a) of Fig. 5) and the last pulse width Tlp (part b) of Fig. 5) for a DVD+R. After initializing 70 the calculation process for the first pulse lead time dTtop, in a first step the new first pulse lead time 3T_dTtop_new is calculated 71 for the symbol length of 3T by adding a correction value 3T_dTtop_correction to the previous first pulse lead time 3T_dTtop_old. The correction value 3T_dTtop_correction is obtained by multiplying the measured value of the leading edge deviation 3T_leading_edge_deviation with a correction factor A, which in the example of Fig. 5 is chosen as A = 1.2. Of course, this specific value has been chosen for illustrative purposes only. The same calculation is then repeated 72 for the remaining symbol lengths 4T to 14T (abbreviated by the expression xT). Similarly, after initializing 80 the calculation process for the last pulse width Tlp first the new last pulse width 3T_Tlp_new is calculated 81 for the symbol length of 3T by adding a correction value 3T_Tlp_correction to the previous last pulse width 3T_Tlp_old. In this case the correction value is obtained by multiplying the measured value of the trailing edge deviation 3T_trailing_edge_deviation with a correction factor B, which is chosen as B = 1.2. As before this calculation is repeated 82 for the remaining symbol lengths. The further parameters of the write strategy are calculated accordingly.

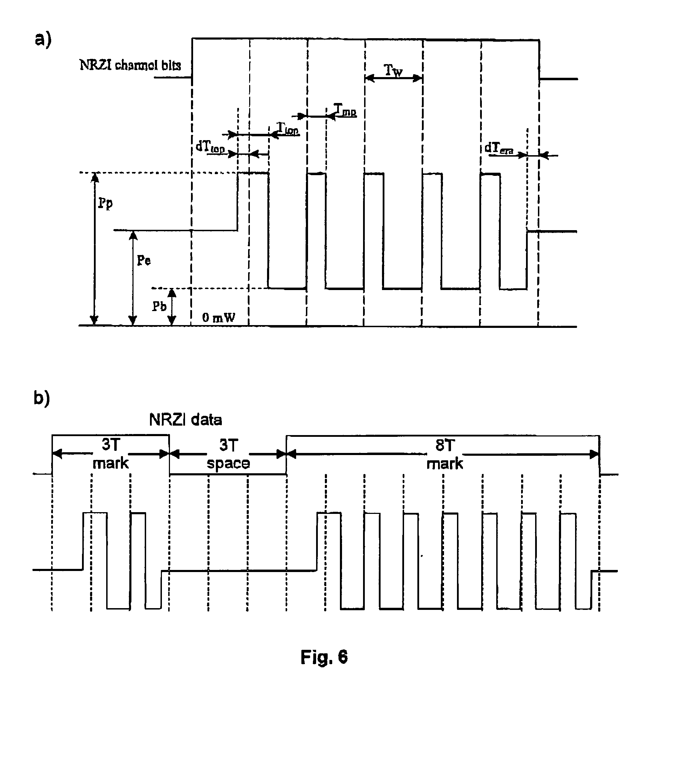

Fig. 6 shows two examples of a write pulse waveform used for DVD+RW (taken from ECMA-337: Data Interchange on 120 mm and 80 mm Optical Disk using +RW Format - Capacity: 4,7 and 1,46 Gbytes per Side). In part a) of Fig. 6 the write pulse waveform for a 6T mark is shown, while part b) of Fig. 6 shows an example of the write pulse waveform for a 3T mark, a 3T space, and an 8T mark. The abbreviations used in the figure have the following meaning:
dTₜₒₚ - first pulse lead time
Tₜₒₚ - first pulse duration
Tₘₚ - multi pulse duration
T_{W} - write clock period
dTₑᵣₐ - erase pulse (i.e. last pulse) lead time
Pp - peak power
Pe - erase power
Pb - bias power

## Claims

1. Method for determining a write strategy for recording on an optical recording medium, having the steps of:
- initializing (5) the parameters of the write strategy;
- writing (11, 30) data to the optical recording medium;
- measuring (12, 31) one or more quality indicators for the written data; and
- adjusting (13, 32, 36, 51, 55) the parameters of the write strategy based on one or more of the measured quality indicators.

2. Method according to claim 1, wherein the steps of writing (14, 33, 37, 52, 56) data to the optical recording medium, measuring (15, 34, 38, 53, 57) one or more quality indicators for the written data, and adjusting (13, 32, 36, 51, 55) the parameters of the write strategy based on the measured quality indicators are repeated until the quality indicators match specific target values.

3. Method according to claim 1 or 2, wherein the step of adjusting the parameters of the write strategy based on the measured quality indicators includes varying (32, 36, 51, 55) the parameters of the write strategy and measuring (15, 34, 38, 53, 57) the change of the quality indicators caused by the varied parameters of the write strategy until the quality indicators match specific target values.

4. Method according to claim 1 or 2, **wherein** the step of adjusting the parameters of the write strategy based on the measured quality indicators includes calculating (13) optimized parameters of the write strategy.

5. Method according to claim 4, further including the steps of varying (32, 36, 51, 55) the parameters of the write strategy and measuring (15, 34, 38, 53, 57) the change of the quality indicators caused by the varied parameters of the write strategy in case the calculated parameters do not lead (16) to an improved quality.

6. Method according to claim 3 or 5, **wherein** the parameters of the write strategy are varied (32, 36, 51, 55) by variable values.

7. Method according to one of claims 1 to 6, **further** including the step of saving (7) the determined write strategy in a memory.

8. Method according to one of the preceding claims, wherein the quality indicators include at least one of the jitter of each T-symbol, the leading and trailing edge jitter, the all T-symbol jitter, the bit error rate, the modulation amplitude, and the signal asymmetry.

9. Method according to one of the preceding claims, **wherein** the parameters of the write strategy include at least one of write laser power, length of the first pulse, length of the following pulses, and pulse height.

10. Method according to one of the preceding claims, wherein the initial values of the parameters are derived from a recommended write strategy indicated on the optical recording medium, a generic write strategy from a database, or a write strategy for a known similar type of optical recording medium.

11. Apparatus for writing to optical recording media, **characterized in that** it performs a method according to one of claims 1 to 10 for determining a write strategy for an optical recording medium.
